# FASCICULE DE BREVET EUROPEEN

(11) **EP 3 847 045 B1**
(45) Date de publication et mention de la délivrance du brevet: **24.07.2024**
(21) Numéro de dépôt: 19774170.5
(22) Date de dépôt: 03.09.2019
(51) Int. Cl.: B60H 1/00, B60H 3/06

(54) **VÉHICULE AUTOMOBILE COMPRENANT UN DISPOSITIF DE CHAUFFAGE, VENTILATION ET/OU CLIMATISATION**
KRAFTFAHRZEUG MIT EINER HEIZUNGS-, LÜFTUNGS- UND/ODER KLIMAANLAGE
VEHICLE COMPRISING A HEATING, VENTILATION AND/OR AIR CONDITIONING DEVICE

(30) Priorité: 07.09.2018 FR 1858036
(43) Date de publication de la demande: 14.07.2021
(73) Titulaire: VALEO SYSTEMES THERMIQUES, 78320 Le Mesnil Saint-Denis (FR)
(72) Inventeur: PIERRES, Philippe, 78322 LE MESNIL SAINT-DENIS CEDEX (FR); VARELA, Nestor, 78322 LE MESNIL SAINT-DENIS CEDEX (FR)
(74) Mandataire: Valeo Systèmes Thermiques
(86) Numéro de dépôt international: PCT/FR2019/052024
(87) Numéro de publication internationale: WO 2020/049250

(56) Documents cités:
- EP-A1- 1 790 509
- EP-A1- 2 664 472
- EP-A1- 3 130 492
- EP-A2- 3 192 682
- DE-A1- 10 350 399
- US-A1- 2007 238 406

## Description

L'invention concerne un véhicule comprenant un dispositif de chauffage, ventilation et/ou climatisation.

Les véhicules automobiles sont couramment équipés d'un dispositif de ventilation, chauffage et/ou climatisation pour réguler les paramètres aérothermiques d'un flux d'air distribué vers l'intérieur de l'habitacle du véhicule. Le dispositif comprend généralement un boîtier délimité par des cloisons dans lesquelles sont ménagées des ouvertures, dont au moins une entrée d'air et au moins une sortie d'air. Le boîtier loge un pulseur d'air pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle, ceci en fonction d'une commande fixée par un occupant du véhicule. A titre d'exemple, les moyens de traitement thermique, c'est-à-dire les échangeurs de chaleur, peuvent comprendre un évaporateur qui est destiné à refroidir et déshumidifier le flux d'air le traversant, ainsi qu'un radiateur, éventuellement associé à un radiateur électrique additionnel, qui est destiné à réchauffer tout flux d'air qui le traverserait. Un tel boîtier comprend également un système de distribution canalisant le flux d'air dans diverses zones de l'habitacle, notamment une zone disposée au niveau d'un pare-brise du véhicule et une zone inférieure, une zone médiane ou une zone supérieure de l'habitacle du véhicule.

Le boîtier de l'installation de chauffage, ventilation et/ou climatisation, comme celui divulgué dans le document EP 1 790 509 A1, est installé dans l'habitacle, entre une planche du bord du véhicule et une paroi séparant l'habitacle et un compartiment moteur du véhicule. Or, pour le confort des occupants du véhicule, il est souhaitable que l'espace intérieur de l'habitacle soit le plus vaste possible. En d'autres termes, pour maintenir un niveau de confort acceptable, il est souhaitable de réduire l'encombrement de certains composants, par exemple la planche de bord. Une telle réduction dimensionnelle rend alors impossible le positionnement d'une installation de chauffage, ventilation et/ou climatisation telle que connue de l'art antérieur.

La qualité de l'air est également un sujet de plus en plus préoccupant. Il est important pour les dispositifs de chauffage, ventilation et/ou climatisation de prévoir des solutions permettant un remplacement aisé du filtre à air.

L'objet de l'invention est de proposer un véhicule comprenant un dispositif de chauffage, ventilation et/ou climatisation qui soit facilement assemblable et qui puissent réduire les encombrements au sein du véhicule notamment au niveau de la planche de bord tout en permettant un remplacement aisé du filtre à air.

Pour cela l'invention propose un véhicule selon la revendication 1, le véhicule comprenant un compartiment moteur, un habitacle, le compartiment moteur et l'habitacle étant séparés par un tablier, et un dispositif de chauffage, ventilation et/ou climatisation pour le véhicule, comprenant un boîtier définissant au moins un conduit d'air pour l'écoulement d'un flux d'air comprenant,
- un module d'entrée, comprenant au moins une entrée d'air, un filtre à air étant agencé au sein du module d'entrée , et
- un module de distribution, comprenant au moins une sortie d'air,

le module d'entrée et le module de distribution étant assemblés l'un à l'autre de manière amovible, le module d'entrée étant agencé dans le compartiment moteur du véhicule, le module de distribution étant agencé dans l'habitacle du véhicule,
le module d'entrée et le module de distribution étant assemblés directement l'un à l'autre de manière amovible,
le tablier comprenant une première ouverture afin de laisser passer des flux d'air issus du module d'entrée au sein du module de distribution,
le filtre à air pouvant être retiré à partir de de l'habitacle du véhicule et le tablier comprenant une deuxième ouverture pour permettre à un utilisateur d'accéder au filtre à air.

Ainsi, ayant une fixation amovible entre les deux, il en résulte un boîtier facilement assemblable et qui peut réduire les encombrements par exemple si on vient à installer une partie du boîtier au niveau de la planche de bord et la deuxième partie dans une autre région du véhicule avec une possibilité de retirer aisément le filtre à air d'une région à l'autre.

Le terme amovible signifie ici que les modules ont une liaison réversible à savoir que le module d'entrée et le module de distribution peuvent être assemblé et désassemblé autant de fois que nécessaire. De plus, le module d'entrée et le module de distribution peuvent être assemblés l'un à l'autre directement ou l'un à l'autre indirectement par exemple avec une cloison entre les deux.

De préférence, le boîtier comprend au moins partiellement :
- un premier conduit d'écoulement pour un premier flux d'air,
- un deuxième conduit d'écoulement pour un deuxième flux d'air, et
- une cloison de séparation étant agencée au sein du boîtier de manière à séparer le premier conduit d'écoulement du deuxième conduit d'écoulement.

Le terme séparer englobe plusieurs significations comme isoler, délimiter, espacer, disjoindre, dissocier, diviser, départager, *etc.* L'idée est qu'une cloison, ou un tablier, permet de diviser un espace ou un conduit en deux sous-espaces ou sous-conduits, et que ces deux sous-ensembles sont indépendants l'un de l'autre de par la cloison, ou tablier. On peut également dire que la cloison sépare ou isole les deux conduits d'écoulement l'un de l'autre.

Selon l'invention ce dispositif de chauffage, ventilation et climatisation pour véhicule automobile comprenant un tel boîtier, comprend en outre un premier échangeur de chaleur est agencé au sein du module d'entrée et un deuxième échangeur de chaleur est agencé au sein du module de distribution.

D'autres modes de réalisation proposent que :
- le premier échangeur de chaleur est agencé dans le premier conduit d'écoulement et dans le deuxième conduit d'écoulement, ledit échangeur de chaleur étant commun aux deux conduits d'écoulement ;
- le dispositif comprend au moins une roue à ailette, et dans lequel le boîtier comprenant une partie volute dans laquelle est agencé ladite au moins une roue à ailette, la cloison de séparation s'étendant au sein du boîtier depuis la volute jusqu'au premier échangeur de chaleur ;
- le dispositif comprend un deuxième échangeur de chaleur agencé premier conduit d'écoulement et dans le deuxième conduit d'écoulement, ledit deuxième échangeur de chaleur étant commun aux deux conduits d'écoulement, dans lequel la cloison de séparation s'étend au sein du boîtier depuis la volute jusqu'à une zone situé en aval par rapport à l'écoulement des flux d'air du deuxième échangeur de chaleur.

D'autres modes de réalisation proposent que :
- la deuxième ouverture correspond également à une entrée d'air du module d'entrée ;
- le tablier comprend une troisième ouverture correspondant à une entrée d'air du module d'entrée.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 correspond à une représentation schématique du dispositif de chauffage, ventilation et/ou climatisation selon l'invention selon une vue de profil ;
- la figure 2 illustre en coupe d'une partie d'un pulseur compris dans le dispositif de chauffage, ventilation et/ou climatisation ;
- la figure 3 correspond à une représentation du dispositif de chauffage, ventilation et/ou climatisation selon une vue en perspective selon un autre mode de réalisation ;
- la figure 4 illustre un tablier adapté pour un mode de réalisation du d'un dispositif de chauffage, ventilation et/ou climatisation.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Selon la présente invention, les termes "aval", "amont", "en série" et "parallèle" qualifient la position d'un composant par rapport à un autre, selon le sens de d'écoulement d'un flux d'air dans un dispositif de chauffage, ventilation et/ou climatisation selon la présente invention.

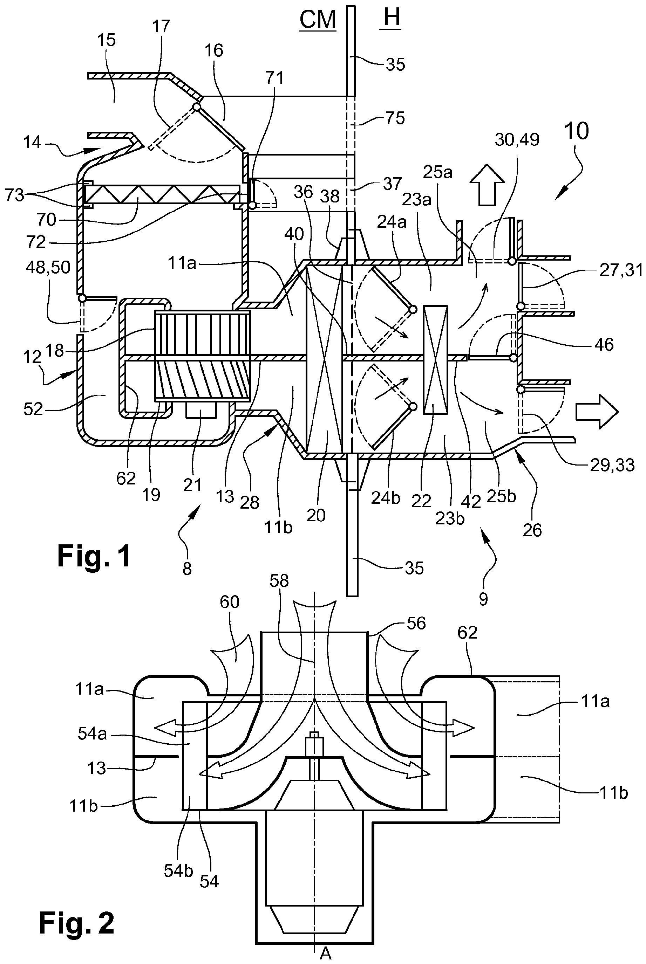

La figure 1 illustre une vue de profil d'un dispositif 10 de chauffage, ventilation et/ou climatisation selon l'invention comprenant un boîtier 12 avec au moins une entrée d'air et une sortie d'air définissant ainsi un conduit, ou conduit d'écoulement, dans lequel circule au moins un flux d'air. Le boîtier 12 comprend en outre au sein de son volume interne une paroi, ou cloison, de séparation 13 de manière à définir un premier conduit d'écoulement 11a pour un premier flux d'air Fa, autrement dit, dans lequel s'écoule un premier flux d'air Fa destiné à être traité thermiquement et à être envoyé dans l'habitacle du véhicule, et un deuxième conduit d'écoulement 11b pour un deuxième flux d'air Fb, autrement dit dans lequel s'écoule un deuxième flux d'air Fb aussi destiné à être traité thermiquement et à être envoyé dans l'habitacle du véhicule. Le boîtier 12 englobe les différents éléments du dispositif 10. En d'autres termes, le boîtier 12 comprend un premier conduit découlement 11a pour qu'un premier flux d'air Fa puisse circuler au sein de ce conduit et le boîtier 12 comprend un deuxième conduit d'écoulement 11b pour qu'un deuxième flux d'air Fb, distinct du premier flux d'air Fa, puisse circuler au sein de ce conduit, les deux conduits d'écoulements 11a,11b étant séparés par une cloison de séparation 13.

Le dispositif 10 comprend un boîtier d'entrée d'air 14 solidaire du boîtier 12. Le boîtier d'entrée d'air 14 comprend une premier entrée, ou bouche, d'air 15 pour l'introduction d'un flux d'air frais, autrement dit un flux d'air provenant de l'extérieur du véhicule lorsque le dispositif 10 est installé dans un véhicule. Le boîtier d'entrée d'air 14 comprend en outre une deuxième entrée, ou bouche, d'air 16 pour l'introduction d'un flux d'air de recyclage, autrement dit un flux d'air provenant de l'habitacle du véhicule. Un volet de mélange 17 est agencé entre la première et la deuxième entrée d'air 15,16 pour pouvoir réguler les débits d'air frais ou d'air de recyclage s'écoulant au sein du dispositif 10. Le volet de mélange 17 est configuré pour passer d'une position où il obture la première entrée d'air 15, empêchant ainsi tout air frais de pénétrer au sein du dispositif 10 à une position où il obture la deuxième entrée d'air 16, comme illustré en figure 1, empêchant ainsi tout air de recyclage de pénétrer au sein du dispositif 10. Bien évidemment, le volet de mélange 17 est apte à adopter toute position intermédiaire.

Le dispositif 10 comprend des moyens aptes à pulser l'air, c'est-à-dire des moyens véhiculant un ou plusieurs flux d'air communément appeler un pulseur (ou GMV pour Groupe Moto-Ventilateur ou encore blower). Ces moyens comprennent par exemple une première roue à ailettes 18 montée dans le premier conduit d'écoulement 11a et apte à générer un premier flux d'air Fa, et une deuxième roue à ailettes 19 montée dans le deuxième conduit d'écoulement 11b et apte à générer un deuxième flux d'air Fb, ces deux roues 18,19 pouvant être entraînées, individuellement ou ensemble, par un moteur électrique 21.

Le dispositif 10 de chauffage, ventilation et/ou climatisation comprend en outre des échangeurs de chaleur pour réchauffer et/ou refroidir ledit flux d'air préalablement à sa distribution au sein de l'habitacle selon les consignes des occupants du véhicule. A titre d'exemple, les moyens de traitement thermique, c'est-à-dire les échangeurs de chaleur, peuvent comprendre un premier échangeur de chaleur 20, qu'on dénommera par la suite l'évaporateur 20, destiné à refroidir et déshumidifier le flux d'air le traversant, ainsi qu'un deuxième échangeur de chaleur 22, qu'on appellera par la suite le radiateur 22, éventuellement associé à un radiateur électrique additionnel, destiné à réchauffer tout flux d'air le ou les traversant. Comme illustré sur la figure 1, chaque échangeur de chaleur 20, 22 est agencé dans le premier conduit d'écoulement 11a et dans le deuxième conduit d'écoulement 11b, chaque échangeur de chaleur 20,22 étant commun aux deux conduits d'écoulement 11a,11b. Le dispositif 10 comprend en outre un premier chemin de contournement 23a du radiateur 22 agencé dans le premier conduit d'écoulement 11a et un deuxième chemin de contournement 23b du radiateur 22 agencé dans le deuxième conduit d'écoulement 11b.

Un volet de mixage 24a,24b est agencé dans chaque conduit d'écoulement 11a,11b. Chaque volet de mixage 24a,24b est apte à passer d'une configuration où il obture le chemin de contournement 23a,23b, comme illustré sur la figure 1, l'intégralité de chaque flux d'air Fa,Fb traversant alors le radiateur 22, à une configuration où il empêche le flux d'air Fa,Fb de passer à travers le radiateur 22, l'intégralité de chaque flux d'air Fa,Fb passant alors par le chemin de contournement 23a,23b. Bien évidemment, chaque volet de mixage 24a,24b est apte à adopter toute position intermédiaire.

Selon un mode de réalisation non illustré, le dispositif de chauffage, ventilation et/ou climatisation peut comprendre en outre un chemin de contournement de l'évaporateur agencé dans chaque conduit d'écoulement.

Chaque conduit d'écoulement 11a,11b comprend en outre une zone de mixage 25a,25b où les flux d'air Fa,Fb chaud et froid ayant traversés respectivement le radiateur 22 et/ou l'évaporateur 20 sont mélangés dans des proportions variables puis acheminés vers les buses, ou bouches, de sorties débouchant dans différentes zones de l'habitacle.

Le dispositif 10 comprend ici trois bouches de sorties 27,29,30 chacune étant doté d'un volet d'obturation 31,33,49 pour obturer ou non ladite bouche de sortie. Le premier conduit d'écoulement 11a pour un flux d'air Fa comprend deux bouches de sortie 27,30 plus précisément une bouche de sortie 30, associée à un volet d'obturation 49, menant le flux d'air Fa vers la buse de dégivrage permettant ainsi de désembuer le pare-brise, et une bouche de sortie 27, associée à un volet d'obturation 31, menant le flux d'air Fa vers la buse de ventilation latéraux/centraux permettant ainsi de refroidir/réchauffer les passagers du véhicule. Le deuxième conduit d'écoulement 11b pour un flux d'air Fb comprend une bouche de sortie 29, associée à un volet d'obturation 33, orientant le flux d'air Fb vers la buse pied permettant ainsi de réchauffer les pieds des passagers avant du véhicule.

Selon un mode de réalisation non illustré, on peut prévoir une possibilité de gérer thermiquement les différentes zones du véhicule de manière indépendante, notamment pour les véhicules haut de gamme. Pour ce faire, le boîtier 12 peut comprendre une bouche de sortie additionnelle au niveau d'un conduit d'écoulement 11a,11b destinée à aérer d'autres zones de l'habitacle telle que les passagers à l'arrière du véhicule.

Comme convenu précédemment, le dispositif 10 de chauffage, ventilation et/ou climatisation, peut être alimenté soit en air frais, soit en air de recyclage. Suivant les conditions de fonctionnement, il peut être particulièrement intéressant d'utiliser de l'air frais pour l'introduire dans l'habitacle au niveau des buses de dégivrage situées à proximité du pare-brise, après chauffage au travers du dispositif de chauffage, ventilation et/ou climatisation, et à l'inverse, d'utiliser de l'air de recyclage pour le rejeter dans l'habitacle au niveau des buses de pieds. Afin de garantir cette séparation entre les flux d'air extérieur et recyclé tout en pouvant sélectionner ou ajuster au mieux le type d'air à délivrer, au moins une cloison de séparation 13 est agencée au sein du boîtier 12.

Les deux conduits d'écoulement 11a,11b sont séparés par une première cloison de séparation 13, dans une zone située en amont, entre et directement en aval des roues à ailettes 18, 19. La première cloison, ou paroi, de séparation 13 s'étend jusqu'au premier échangeur de chaleur 20, plus précisément, la première cloison de séparation 13 vient à proximité du premier échangeur de chaleur 20, à savoir que ladite cloison de séparation 13 peut venir en butée, ou non, contre l'évaporateur 20. Le dispositif 10 peut comprendre en outre une deuxième cloison de séparation 40 agencée entre les deux échangeurs de chaleur 20,22 et séparant, ou délimitant, les deux conduits d'écoulement 11a,11b l'un de l'autre. Ladite cloison de séparation 40 pouvant venir en butée, ou non, contre chaque échangeur de chaleur 20,22. Le dispositif 10 peut comprendre en outre une troisième cloison de séparation 42 agencée en aval du deuxième échangeurs de chaleur 22 et séparant, ou délimitant, les deux conduits d'écoulement 11a,11b. Un volet 46 peut être agencé sur une desdites cloison de séparation 13,40,46 de manière à permettre le passage d'un flux d'air Fa,Fb d'un conduit d'écoulement 11a,11b à un autre. Tel qu'illustré sur la figure 1, le volet 46 est monté au niveau de l'extrémité aval de la troisième cloison de séparation 42. Bien évidemment, le volet 46 pourrait être agencé sur la première ou la deuxième cloison de séparation 13,40.

La partie du boîtier 12 dans laquelle est agencé le deuxième échangeur de chaleur 22 et les bouches de sorties 27,29,30 est communément appelée la distribution 26.

Tel qu'illustré sur la figure 1, le boîtier d'entrée d'air peut comprendre une troisième entrée, ou bouche, d'air 48 pour l'introduction d'un flux d'air de recyclage. L'entrée d'air 48 est associée à un volet 50. Le volet 50 peut passer d'une position extrême où il obture l'entrée d'air 48, dans ce cas, la deuxième roue à ailettes 19 peut être alimentée en air frais et/ou en air de recyclage issus des entrées d'air 15,16 selon la position du volet de mélange 17 via un passage 52. Le volet 50 peut passer à une autre position extrême où le passage 52 est obturé et la deuxième roue à ailettes 19 est alors exclusivement alimentée en air de recyclage issu de l'entrée d'air 48. Il est alors possible d'envisager toutes les modes de fonctionnement air frais 100%, la deuxième et troisième entrées d'air 16,48 étant obturées par leurs volets associés 17,50, air de recyclage 100% la première entrée d'air 15 étant obturée par le volet de mélange 17, et air mélangé 50/50, la deuxième entrée d'air 16 étant obturée par le volet de mélange 17.

Selon un autre mode de réalisation, le dispositif 10 peut comprendre un boîtier d'entrée d'air 14 et un pulseur (ou groupe moto-ventilateur (GMV) ou encore blower) comme illustré en figure 2, à savoir avec une unique turbine, en d'autres termes une roue à ailettes, 54 apte à être entraînée en rotation autour d'un axe A. Le dispositif 10 comprend un organe tubulaire 56 apte à délimiter un premier canal de circulation d'air 58 permettant l'écoulement d'un premier flux d'air destiné à traverser une première partie axiale de la turbine 54b et un deuxième canal de circulation d'air 60 permettant l'écoulement d'un deuxième flux d'air destiné à traverser une deuxième partie axiale de la turbine 54a. L'organe tubulaire 56 est monté à l'endroit d'une première extrémité de ladite turbine 54 et délimite un espace, ou volume, interne formant au moins une partie du premier canal de circulation d'air 58, le deuxième canal de circulation d'air 60 s'étendant à l'extérieur de l'organe tubulaire 56. Le dispositif 10 comprend en outre un boîtier d'entrée d'air 14 recouvrant la première extrémité de la turbine 54 et l'organe tubulaire 56. Le boîtier d'entrée d'air 14 comprend des moyens de guidage aptes à diriger un premier flux d'air dans le premier canal de circulation d'air 58, et à diriger un deuxième flux d'air dans le deuxième canal de circulation d'air 60. Les parties axiales de la turbine 54a,54b peuvent par exemple être faite en référence à l'axe vertical du véhicule, lorsque le dispositif 10 est installé dans le véhicule.

Pour cela, le boîtier d'entrée d'air 14 peut par exemple comprendre une première et deuxième bouches d'entrée d'air 15,16, une pour l'air de recyclage et une pour l'air frais, et trois volets tambour ayant des axes de rotation coaxiaux. Le volet tambour central est agencé pour permettre la communication aéraulique entre les bouches d'entrées d'air 15,16 et le premier canal de circulation d'air 58. Les deux tambours latéraux sont agencés pour permettre la communication aéraulique entre les bouches d'entrées d'air 15,16 et le deuxième canal de circulation d'air 60. Le boîtier d'entrée d'air 14 comportant en outre un filtre à air 70 destiné à être traversé par le premier et le deuxième flux d'air.

La turbine 54 est agencée dans une volute 62 dont la sortie comprend les deux conduits d'écoulement 11a,11b séparé par la paroi de séparation 13. Autrement dit, le premier canal de circulation d'air 58 oriente le flux d'air vers une première partie axiale de la turbine 54b et débouche ainsi dans le deuxième conduit d'écoulement 11b, tandis que le deuxième canal de circulation d'air 60 oriente le flux d'air vers la deuxième partie axiale 54a de la turbine 54 et débouche ainsi dans le premier conduit d'écoulement 11a.

Le pulseur d'air, c'est-à-dire la ou les roues à ailettes 18,19,54 est contenu dans une partie du boîtier 12 en forme de spirale, communément appelé volute 62. Les flux d'air aspirés par la ou les roues à ailettes 18,19,54 sont orientés vers les parois de la volute 62 et épousent ainsi la trajectoire circulaire définie par ces parois. La volute 62 présente une évolution radiale en partant d'un point appelé nez de la volute, sur une gamme d'angle θ généralement 360°. La volute 62 présente ensuite une sortie de volute ayant la forme d'un conduit rectiligne de manière à ce que les flux d'air sortant de la volute 62 suivent cette même direction.

La partie du boîtier 12 positionnée entre la sortie de la volute 62 et la distribution 26 est communément appelée le divergent 28. Le divergent 28 correspond à un canal dans lequel le flux d'air sortant de la volute 62 est acheminé jusqu'au premier échangeur de chaleur, ici l'évaporateur 20. L'évaporateur 20, étant généralement plus grand en hauteur que le pulseur d'air et la volute 62, le divergent 28 présente un élargissement, par rapport à la volute 62, sur sa hauteur et/ou sur sa largeur.

Comme illustré sur la figure 1, le dispositif 10 de chauffage, ventilation et/ou climatisation est séparé, ou délimité, en deux parties selon un axe, qui peut être l'axe vertical lorsque le dispositif 10 est installé dans un véhicule automobile. Si bien qu'on distingue un premier module, à savoir le module d'entrée 8. Le module d'entrée 8 comprend le boîtier d'entrée d'air 14, donc les entrées d'air 15,16,48, la volute 62, le divergent 28 et le premier échangeur de chaleur 20, et donc la partie du boîtier 12 portant l'évaporateur 20. On distingue un second module, à savoir le module de distribution 9. Le module de distribution 9 comprend quant à lui, la distribution 26 à savoir la partie du boîtier 12 où sont agencés le radiateur 22 et les bouches de sorties 27,29,30 comme expliqué précédemment. Le module d'entrée 8 et le module de distribution 9 sont deux sous-ensembles distincts et disjoints du dispositif 10 de chauffage, ventilation et/ou climatisation.

L'invention ne se limite pas à ces modes de réalisation précis dans le sens où le module de distribution 9 pourrait aussi comprendre l'évaporateur 20.

Le module d'entrée 8 et le module de distribution 9 sont assemblés, ou fixés, l'un à l'autre de manière amovible. Pour cela, le module d'entrée 8 et le module de distribution 9 peuvent comprendre des moyens de fixation 38 réversibles et de formes complémentaires tels que des clips, des écrous/vis filetées, des boulons, *etc*., une partie femelle étant agencé sur le module d'entrée 8 et la partie mâle correspondante sur le module de distribution 9 ou inversement. On peut également dire que le dispositif 10 comprend des moyens de raccordement 38 étanches et réversibles.

Comme illustré sur la figure 1, le véhicule automobile comprend un tablier 35 aussi appelé un pare-feu. Le tablier 35 correspond à une paroi, ou cloison, séparant, ou délimitant l'habitacle H et le compartiment moteur CM comme illustré en figure 1. En d'autres termes, le tablier 35 peut prendre la forme d'une tôle s'étendant sensiblement verticalement entre un plancher et un pare-brise avant du véhicule. L'habitacle H correspond à la partie du véhicule où le conducteur et passagers sont situés et le compartiment moteur CM correspond à la partie du véhicule où un moteur, un onduleur, ou encore des calculateurs sont localisés.

Comme illustré sur la figure 1, le tablier 35 correspond à la délimitation entre le module de distribution 9 et le module d'entrée 8, où le module d'entrée 8 est agencé dans le compartiment moteur CM et le module de distribution 9 est agencé au sein de l'habitacle H. Pour cela, le tablier 35 comprend au moins une ouverture 36 pour laisser les flux d'air Fa,Fb s'écouler au sein de leur conduit d'écoulement 11a,11b respectif d'un module 8,9 à l'autre. Un tel agencement est particulièrement avantageux puisque les nuisances sonores générées par le pulseur et les condensats générés au niveau de l'évaporateur 20 peuvent être évacués sans pénétrer au sein de l'habitacle H réduisant ainsi l'inconfort des passagers. Plus particulièrement, le module d'entrée 8 et le module de distribution 9 sont reliés entre eux par des moyens de fixation 38 au niveau de l'ouverture 36 tout en étant en communication aéraulique.

Selon un mode de réalisation qui ne fait pas partie de l'invention, il est possible de concevoir selon l'invention un dispositif où le module d'entrée 8 est agencé dans l'habitacle et le module de distribution 9 est agencé dans le compartiment moteur, le tablier 35 comprenant une deuxième ouverture pour permettre à un utilisateur d'accéder au filtre à air. Il faudra toutefois prévoir des ouvertures additionnelles dans le tablier 35 et éventuellement des conduits additionnels pour amener le flux d'air traité thermiquement depuis le module de distribution 9 jusqu'à l'habitacle ainsi que depuis l'extérieur jusqu'au module d'entrée 8.

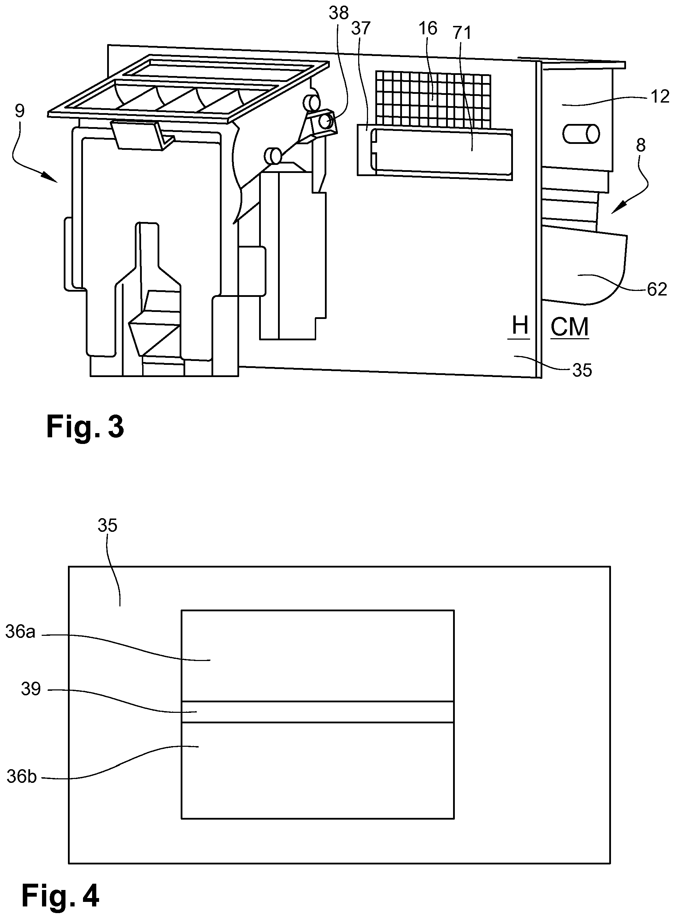

Selon une variante qui ne fait pas partie de l'invention, le module d'entrée 8 et le module de distribution 9 peuvent comprendre des moyens de fixation 38 pour être assemblés au tablier 35. Par exemple, le tablier 35 peut comprendre une bande d'accostage agencée autour de l'ouverture 36 et contre laquelle les modules 8,9 viennent en appui. En d'autres termes, le dispositif 10 est solidarisé sur le tablier 35, à l'aide de moyens de fixation 38, ou encore des moyens de solidarisation, dédiés à cet effet. A titre d'exemple, le module de distribution 9 peut comporter une ou plusieurs pattes de fixation, des vis, des clips, ou encore des crochets, permettant une fixation sur le tablier 35. De manière analogue, le module d'entrée 8 peut comporter une ou plusieurs pattes de fixation, des vis, des clips, ou encore des crochets, permettant une fixation sur le tablier 35 comme illustré en figure 3. En effet, comme illustré sur la figure 3, le module de distribution 9 comprend ici une patte de fixation comprenant un taraudage dans lequel est introduite une vis avec une tige filetée, le tablier 35 comprenant également un taraudage traversant ou non pour permettre une coopération par complémentarité de forme entre l'extrémité de la tige filetée et un écrou.

Selon l'invention, le module d'entrée 8 comporte un dispositif de filtration, et plus précisément un filtre à air 70. Le filtre à air 70 comprend un média filtrant correspondant à un ensemble de couches plissées avec éventuellement un cadre rigide ou souple entourant au moins partiellement le média filtrant. Le filtre à air 70 est agencé entre les entrées d'air 15,16 et le pulseur. Afin de permettre un remplacement aisé du filtre à air 70, le boîtier 12 comprend une ouverture 72 permettant l'introduction et le retrait du filtre à air 70 ainsi qu'une trappe 71 amovible, ou mobile, correspondant à une porte ou panneau, obturant cette ouverture 72 pratiquée au sein du boîtier 12, ceci permettant à un utilisateur d'accéder aisément au filtre à air 70 depuis l'extérieur du dispositif 10 pour procéder à son remplacement. Le boîtier 12, notamment le boîtier d'entrée d'air 14, peut aussi comprendre des supports 73, par exemple des nervures, afin de porter le filtre à air 70 et de le maintenir en place.

Comme expliqué précédemment, le dispositif 10 selon l'invention permet, de par la configuration et l'agencement des modules d'entrée 8 et de distribution 9, à un utilisateur de remplacer le filtre à air 70 depuis l'habitacle H. Pour cela, le tablier 35 comprend une deuxième ouverture 37 de dimension égale ou supérieure à la trappe 71 permettant ainsi à un utilisateur d'accéder à la trappe 71 et donc au filtre à air 70. Selon le mode de réalisation illustré à la figure 1, le tablier 35 peut comprendre une troisième ouverture 75 correspondant à la deuxième entrée d'air 16 permettant l'introduction d'un flux d'air de recyclage au sein du dispositif 10 de chauffage, ventilation et/ou climatisation via un conduit. Selon le mode de réalisation illustré en figure 3, la deuxième ouverture 37 est de dimension supérieure à la trappe 71 et correspond ainsi à la deuxième entrée d'air 16 et à l'ouverture permettant d'accéder à la trappe 71. Autrement dit, le conduit menant l'air de recyclage au pulseur et le conduit menant l'utilisateur à la trappe 71 se rejoignent et sont confondus au niveau de la deuxième ouverture 37. L'entrée d'air 16 comprend une grille empêchant à tout corps solide externe de pénétrer au sein du dispositif 10.

Cet agencement est particulièrement adapté pour un dispositif de chauffage, ventilation et/ou climatisation et type semi-centré où l'évaporateur 20 et la distribution 26 sont dans un même axe longitudinal tandis que le boîtier d'entrée 14 et le pulseur sont agencés latéralement, rendant ainsi le filtre à air 70 plus accessible.

Selon un autre mode de réalisation, le tablier 35 tel qu'illustré en figure 4 peut comprendre en outre au niveau de la première ouverture 36, deux sous-ouvertures 36a,36b avec une poutre 39 agencée entre les deux de manière à délimiter les deux sous-ouvertures 36a,36b. Une des cloisons de séparation 13,40,42 peut ainsi venir en appui sur cette poutre 39, pour cela la poutre 39 peut comprendre des moyens de réception telle une encoche ou une rainure dans laquelle ladite cloison peut venir s'introduire. Ainsi la première sous-ouverture 36a peut être dédiée au premier conduit d'écoulement 11a et la deuxième sous-ouverture 36b peut être dédiée au deuxième conduit d'écoulement 11b.

Selon un autre mode de réalisation non illustré le dispositif de chauffage, ventilation et/ou climatisation, en particulier le boitier, peut comprendre des moyens d'insonorisation ou encore un moyen d'absorption acoustique. Pour cela, le boitier peut comprendre un revêtement fait d'un matériau poreux ou d'un matériaux tissé ou non-tissé constitué de différentes fibres. Les parois du boitier peuvent aussi être faites de ces matériaux insonorisant.

Selon un autre mode de réalisation non illustré le dispositif de chauffage, ventilation et/ou climatisation peut comprendre en outre un capteur de détection de matière particulaire. Ledit capteur de détection de matière particulaire comportant au moins un premier orifice définissant une première entrée d'air dite pour un flux d'air dit extérieur et un second orifice définissant une seconde entrée d'air dite pour un flux d'air dit de recyclage, lesdites entrée d'air pour le flux d'air extérieur et entrée pour le flux d'air de recyclage étant distinctes l'une de l'autre. Ledit capteur de détection de matière particulaire peut être agencé au niveau du boitier d'entrée d'air ou encore au niveau de la distribution.

## Revendications

1. Véhicule automobile comprenant un compartiment moteur (CM), un habitacle (H), le compartiment moteur (CM) et l'habitacle (H) étant séparé par un tablier (35), et un dispositif (10) de chauffage, ventilation et/ou climatisation pour le véhicule, comprenant un boîtier (12) définissant au moins un conduit d'air (11) pour
l'écoulement d'un flux d'air comprenant,
- un module d'entrée (8), comprenant au moins une entrée d'air (15,16), un filtre à air (70) étant agencé au sein du module d'entrée (8), et
- un module de distribution (9), comprenant au moins une sortie d'air (27,29,30),
le module d'entrée (8) et le module de distribution (9) étant assemblés l'un à l'autre de manière amovible, le module d'entrée (8) étant agencé dans le compartiment moteur (CM) du véhicule, le module de distribution (9) étant agencé dans l'habitacle (H) du véhicule, le module d'entrée (8) et le module de distribution (9) étant assemblés directement l'un à l'autre de manière amovible, le tablier (35) comprenant une première ouverture (36) afin de laisser passer des flux d'air (Fa,Fb) issus du module d'entrée (8) au sein du module de distribution (9), **caractérisé en ce que** le filtre à air (70) peut être retiré à partir de l'habitacle (H) du véhicule,
le tablier (35) comprenant une deuxième ouverture (37) pour permettre à un utilisateur d'accéder au filtre à air (70).

2. Véhicule automobile selon la revendication 1, dans lequel le boîtier (12) comprend au moins partiellement :
- un premier conduit d'écoulement (11a) pour un premier flux d'air (Fa),
- un deuxième conduit d'écoulement (11b) pour un deuxième flux d'air (Fb), et
- une cloison de séparation (13) étant agencée au sein du boîtier (12) de manière à séparer le premier conduit d'écoulement (11a) du deuxième conduit d'écoulement (11b).

3. Véhicule automobile selon la revendication 1 ou 2, dans lequel, la deuxième ouverture (37) correspond également à une entrée d'air (15,16) du module d'entrée (8).

4. Véhicule automobile selon la revendication 1 ou 2, dans lequel, le tablier (35) comprend une troisième ouverture (75) correspondant à une entrée d'air (15,16) du module d'entrée (8).

## Patentansprüche

1. Kraftfahrzeug, umfassend einen Motorraum (CM), einen Innenraum (H), wobei der Motorraum (CM) und der Innenraum (H) durch eine Spritzwand (35) getrennt sind, und eine Heizungs-, Lüftungs- und/oder Klimatisierungsvorrichtung (10) für das Fahrzeug, die ein Gehäuse (12) umfasst, das mindestens einen Luftkanal (11) für das Strömen eines Luftstroms definiert, und umfasst:
- ein Einlassmodul (8), das mindestens einen Lufteinlass (15, 16) umfasst, wobei ein Luftfilter (70) innerhalb des Einlassmoduls (8) angeordnet ist, und
- ein Verteilungsmodul (9), das mindestens einen Luftauslass (27, 29, 30) umfasst,
wobei das Einlassmodul (8) und das Verteilungsmodul (9) lösbar zusammengebaut sind, wobei das Einlassmodul (8) im Motorraum (CM) des Fahrzeugs angeordnet ist, wobei das Verteilungsmodul (9) im Innenraum (H) des Fahrzeugs angeordnet ist,
wobei das Einlassmodul (8) und das Verteilungsmodul (9) lösbar direkt zusammengebaut sind, wobei die Spritzwand (35) eine erste Öffnung (36) umfasst, um vom Einlassmodul (8) kommende Luftströme (Fa, Fb) in das Verteilungsmodul (9) hindurchströmen zu lassen, **dadurch gekennzeichnet, dass** der Luftfilter (70) vom Innenraum (H) des Fahrzeugs aus herausgezogen werden kann, wobei die Spritzwand (35) eine zweite Öffnung (37) umfasst, um einem Benutzer den Zugang zum Luftfilter (70) zu ermöglichen.

2. Kraftfahrzeug nach Anspruch 1, wobei das Gehäuse (12) wenigstens teilweise umfasst:
- einen ersten Strömungskanal (11a) für einen ersten Luftstrom (Fa),
- einen zweiten Strömungskanal (11b) für einen zweiten Luftstrom (Fb), und
- eine Trennwand (13), die innerhalb des Gehäuses (12) so angeordnet ist, dass sie den ersten Strömungskanal (11a) von dem zweiten Strömungskanal (11b) trennt.

3. Kraftfahrzeug nach Anspruch 1 oder 2, wobei die zweite Öffnung (37) auch einem Lufteinlass (15, 16) des Einlassmoduls (8) entspricht.

4. Kraftfahrzeug nach Anspruch 1 oder 2, wobei die Spritzwand (35) eine dritte Öffnung (75) umfasst, die einem Lufteinlass (15, 16) des Einlassmoduls (8) entspricht.

## Claims

1. Motor vehicle comprising an engine compartment (CM) and a passenger compartment (H), the engine compartment (CM) and the passenger compartment (H) being separated by a bulkhead (35), and a heating, ventilation and/or air conditioning device (10) for the vehicle, comprising a housing (12) defining at least one air duct (11) for the flow of an air stream, comprising:
- an inlet module (8), comprising at least one air inlet (15, 16), an air filter (70) being arranged within the inlet module (8); and
- a distribution module (9), comprising at least one air outlet (27, 29, 30);
the inlet module (8) and the distribution module (9) being joined to one another in a removable manner, the inlet module (8) being arranged in the engine compartment (CM) of the vehicle, the distribution module (9) being arranged in the passenger compartment (H) of the vehicle, the inlet module (8) and the distribution module (9) being directly joined to one another in a removable manner, the bulkhead (35) comprising a first opening (36) in order to let air streams (Fa, Fb) coming from the inlet module (8) pass into the distribution module (9), **characterized in that** the air filter (70) can be removed from the passenger compartment (H) of the vehicle, the bulkhead (35) comprising a second opening (37) to allow a user to access the air filter (70).

2. Motor vehicle according to Claim 1, wherein the housing (12) at least partially comprises:
- a first flow duct (11a) for a first air stream (Fa);
- a second flow duct (11b) for a second air stream (Fb); and
- a separation partition (13) arranged within the housing (12) so as to separate the first flow duct (11a) from the second flow duct (11b).

3. Motor vehicle according to Claim 1 or 2, wherein the second opening (37) also corresponds to an air inlet (15, 16) of the inlet module (8).

4. Motor vehicle according to Claim 1 or 2, wherein the bulkhead (35) comprises a third opening (75) corresponding to an air inlet (15, 16) of the inlet module (8) .
